(19) Europäisches Patentamt
European Patent Office
Office européen des brevets

(11) **EP 4 020 621 A1**

(12) **EUROPEAN PATENT APPLICATION**
published in accordance with Art. 153(4) EPC

(43) Date of publication:
**29.06.2022 Bulletin 2022/26**

(21) Application number: **20855749.6**

(22) Date of filing: **19.08.2020**

(51) International Patent Classification (IPC):
**H01M 4/131** (2010.01)     **H01M 4/134** (2010.01)
**H01M 4/1391** (2010.01)     **H01M 4/1395** (2010.01)
**H01M 4/04** (2006.01)     **H01M 4/48** (2010.01)
**H01M 4/38** (2006.01)     **H01M 4/36** (2006.01)
**H01M 10/052** (2010.01)

(52) Cooperative Patent Classification (CPC):
**H01M 4/04; H01M 4/131; H01M 4/134;
H01M 4/1391; H01M 4/1395; H01M 4/36;
H01M 4/38; H01M 4/48; H01M 10/052;** Y02E 60/10

(86) International application number:
**PCT/KR2020/011028**

(87) International publication number:
**WO 2021/034097 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2019   KR 20190101353
19.08.2019   KR 20190101354
19.08.2019   KR 20190101355**

(71) Applicant: **Daejoo Electronic Materials Co., Ltd.
Siheung-si, Gyeonggi-do 15094 (KR)**

(72) Inventors:
• **LIM, Hyun Hee**
  **Siheung-si, Gyeonggi-do 15094 (KR)**
• **OH, Seung Min**
  **Siheung-si, Gyeonggi-do 15094 (KR)**
• **LIM, Jong Chan**
  **Siheung-si, Gyeonggi-do 15094 (KR)**

(74) Representative: **HGF
HGF Limited
1 City Walk
Leeds LS11 9DX (GB)**

(54) **SECONDARY BATTERY AND MANUFACTURING METHOD THEREFOR**

(57)     Embodiments of the present invention relate to a secondary battery comprising a lithium-predoped, silicon-based negative active material and a method for manufacturing same. The secondary battery can not only realize safety, but also further enhance energy density, cycle characteristics, and rate characteristics, and particularly, can remarkably improve initial discharge capacity and capacity retention.

EP 4 020 621 A1

## Description

### Technical Field

The present invention relates to a secondary battery comprising a negative electrode predoped with lithium and comprising a silicon-based negative electrode active material and to a process for manufacturing the same.

### Background Art

In recent years, as electronic devices become smaller, lighter, thinner, and more portable in tandem with the development of the information and communication industry, the demand for the high energy density of batteries used as power sources for these electronic devices is increasing. A lithium secondary battery is a battery that can best meet this demand, and research on small batteries using the same, as well the application thereof to large electronic devices such as automobiles and power storage systems is being actively conducted.

Lithium secondary batteries have mainly used a lithium-containing transition metal oxide such as $LiCoO_2$ and $LiMn_2O_4$ as a positive electrode and a carbon-based material such as graphite as a negative electrode. However, the excessive improvement in the charging rate of an active material, the thinning of a separator, or the high voltage of charging voltage through a method of reducing the film thickness of such constituent materials as a separator in recent years particularly in order to achieve a high-capacity lithium secondary battery causes problems that adversely affect the safety of lithium secondary batteries.

Thus, new materials capable of attaining high energy density while achieving reliability and safety of secondary batteries, for example, an alloy negative electrode active material such as silicon or tin and oxides thereof, are attracting attention as next-generation high-capacity materials. The oxide-based alloy negative electrode active material has an advantage in that it has less volume change than that of a non-oxide-based negative electrode active material and has a charge and discharge capacity greater than that of graphite by four times or more. However, the oxide-based alloy negative electrode active material has a problem in that the irreversible capacity at the time of first charging and discharging is large.

In general, a negative electrode active material composed of silicon oxide is subjected to an alloying reaction with a material capable of reversibly occluding and releasing lithium and a material incapable of reversibly occluding and releasing lithium (irreversible material) during initial charging. Therefore, there is a problem in that the lithium ions present in the positive electrode at the time of design are decreased.

In this regard, Japanese Laid-open Patent Publication No. 2002-313324 discloses a method of improving the initial efficiency by directly adding lithium metal to a negative electrode when the negative electrode is fabricated. However, if lithium metal is directly added to a negative electrode, gelation takes place during the preparation of a negative electrode active material composition, thereby causing process problems and performance problems of the secondary battery.

In addition, Japanese Laid-open Patent Publication No. 2008-084842 discloses a method of doping by contacting a negative electrode with lithium metal when a secondary battery is manufactured. In such a case, however, since a reaction involving significant heat generation with silicon oxide or tin oxide may take place, there may be a problem in the safety of the secondary battery.

Meanwhile, a technique of directly doping lithium into a silicon oxide-based ($SiO_x$, $0.9 \leq x \leq 1.6$) material is disclosed in Japanese Laid-open Patent Publication No. 2011-222153 and Japanese Patent No. 6274253. However, according to the techniques presented in these documents, satisfactory secondary battery characteristics cannot be attained, or the reaction rate is slow, and they involve difficulties in mass production and practical use.

### Detailed Description of the Invention

### Technical Problem

The present invention is devised to solve the problems of the prior art. A technical problem to be solved by the present invention is to provide a secondary battery capable of enhancing the energy density, cycle characteristics, and rate characteristics, and, in particular, further enhancing the initial discharge capacity and capacity retention rate.

Another technical problem to be solved by the present invention is to provide a process for manufacturing the secondary battery.

### Solution to the Problem

In order to accomplish the above object, an embodiment of the present invention provides a secondary battery, which comprises a positive electrode, a negative electrode, and an electrolyte, wherein the positive electrode comprises a metal oxide active material, the negative electrode comprises a silicon-based negative electrode active material, and the negative electrode is predoped with lithium in an amount corresponding to the initial irreversible capacity of the negative electrode.

Another embodiment provides a process for manufacturing the secondary battery, which comprises (1-1) applying a negative electrode active material composition comprising a silicon-based negative electrode active material to a negative electrode current collector to prepare a negative electrode; (1-2) interposing a separator between the negative electrode and a lithium metal plate to prepare a cell; (1-3) electrochemically activating the cell obtained in step (1-2) to predope the negative electrode with lithium; and (1-4) manufacturing a secondary battery using the negative electrode predoped with lithium.

Still another embodiment provides a process for manufacturing the secondary battery, which comprises (2-1) applying a negative electrode active material composition comprising a silicon-based negative electrode active material to a negative electrode current collector to prepare a negative electrode; (2-2) placing the negative electrode and a lithium metal plate in a reactor and then carrying out a redox reaction to predope the negative electrode with lithium; and (2-3) sequentially stacking the negative electrode predoped with lithium, a separator, and a positive electrode comprising a metal oxide active material to prepare an electrode.

**Advantageous Effects of the Invention**

The secondary battery according to the embodiment can not only achieve safety, but also significantly enhance the energy density and enhance the cycle characteristics and rate characteristics. In particular, the secondary battery may be further enhanced in initial discharge capacity and capacity retention rate.

**Brief Description of the Drawing**

Fig. 1 illustrates an example of a step of predoping a negative electrode with lithium in the process for manufacturing a secondary battery according to an embodiment of the present invention.
Fig. 2 is a graph showing the capacity characteristics of Example 3-2 and Comparative Example 3-1 with respect to the number of cycles.

**Best Mode for Carrying out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

[Secondary battery]

The secondary battery according to an embodiment of the present invention comprises a positive electrode, a negative electrode, and an electrolyte, wherein the positive electrode comprises a metal oxide active material, the negative electrode comprises a silicon-based negative electrode active material, and the negative electrode is predoped with lithium in an amount corresponding to the initial irreversible capacity of the negative electrode.

The secondary battery according to an embodiment of the present invention comprises a negative electrode comprising a silicon-based negative electrode active material predoped with lithium in an amount corresponding to the initial irreversible capacity of the negative electrode, whereby it is possible to not only achieve safety of the secondary battery, but also significantly enhance the energy density and enhance the cycle characteristics and rate characteristics.

In general, although a silicon-based negative electrode active material exhibits a high capacity, as the cycle progresses, the volume expansion rate becomes 300% or more, which may lead to an increase in the resistance and an increase in the side reaction of the liquid electrolyte. Thus, the problem caused by the formation of a solid electrolyte interface (SEI) layer, such as damage to the electrode structure, may be exacerbated. In addition, a silicon oxide-based negative electrode active material has a lower volume expansion rate than that of a silicon-based negative active material, whereas the initial irreversible capacity is increased by $Li_2O$ due to oxygen in the negative electrode active material, so that there arises a problem in that the energy density is lowered, and the cycle characteristics and rate characteristics are deteriorated.

According to an embodiment of the present invention, it is important to make the irreversible capacity of the negative electrode active material as small as possible in order to obtain a secondary battery having a high energy density. Accordingly, a negative electrode comprising a silicon-based negative electrode active material predoped with lithium is adopted in the present invention, whereby it is possible to lower the initial irreversible capacity of the negative electrode, to prevent the penetration of metal ions of the positive electrode into the SEI of the negative electrode surface, and to enhance the energy density. The predoping compensates for the irreversible capacity, or lithium required for charging and discharging can be contained in the negative electrode even when an active material that does not contain lithium is used in the positive electrode. Thus, the performance of the secondary battery can be enhanced.

According to an embodiment of the present invention, the negative electrode may comprise a silicon-based negative active material. The silicon-based negative electrode active material may comprise at least one selected from the group consisting of silicon fine particles, a compound represented by $SiO_x$ ($0.3 \leq x \leq 1.6$), silicon dioxide, and a silicate comprising magnesium, calcium, aluminum, or a combination thereof.

In addition, the silicon-based negative electrode active material may be an active material comprising a matrix of an oxide capable of occluding and releasing lithium. The matrix may comprise silicon oxide, tin oxide, or a mixture thereof.

In the negative electrode active material, the content of silicon may be 30% by weight to 80% by weight, specifically, 40% by weight to 80% by weight, more specifically, 40% by weight to 70% by weight, especially, 40% by weight to 60% by weight, based on the total weight of the negative electrode active material. If the content of silicon is less than 30% by weight, the amount of the negative electrode active material acting at the time of occlusion and release of lithium is small, which may reduce the charge and discharge capacity of the secondary battery. On the other hand, if it exceeds 80% by weight, the charge and discharge capacity of the secondary battery may be increased, whereas the expansion and contraction of the electrode during charging and discharging may be excessively increased, which may deteriorate the cycle characteristics.

The silicon fine particles may be crystalline or amorphous and specifically may be amorphous or in a similar phase thereto. If the silicon fine particles are amorphous or in a similar phase thereto, expansion or contraction during charging and discharging of the lithium secondary battery is small, and battery performance such as capacity characteristics can be further enhanced.

In addition, the silicon fine particles may be present as an uniformly distributed form in at least one selected from the group consisting of a compound represented by $SiO_x$ ($0.3 \leq x \leq 1.6$), silicon dioxide, and a silicate comprising magnesium, calcium, aluminum, or a combination thereof, or as surrounded by them. In such an event, expansion or contraction of silicon may be suppressed, thereby enhancing the performance of the secondary battery. Meanwhile, if a carbon layer comprising a carbon film is formed on the silicon fine particles, they may similarly have a structure as dispersed in a silicon oxide compound or a silicate.

In addition, when the silicon-based negative electrode active material comprises the silicon fine particles, it is preferable because it reacts with the silicon fine particles to form a lithium alloy which is hard to destroy. The silicon fine particles react with lithium during charging to form $Li_{4.2}Si$ and return to silicon during discharging.

When the silicon fine particles are subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, they may have a crystallite size of 2 nm to 10 nm, specifically, 2 nm to 9 nm, more specifically, 2 nm to 8 nm. If the crystallite size of the silicon fine particles exceeds 10 nm, cracks may occur in the negative electrode active material due to volume expansion or contraction during charging and discharging, thereby deteriorating the cycle characteristics. In addition, if the crystallite size of the silicon fine particles is less than 2 nm, the charge and discharge capacity may be reduced, and physical properties may change during storage due to increased reactivity, which may cause problems in processability. If the crystallite size of the silicon fine particles is within the above range, there is almost no region that does not contribute to charging and discharging, and it is possible to suppress a reduction in the Coulombic efficiency representing the ratio of charge capacity to discharge capacity, that is, the charging and discharging efficiency.

If the silicon fine particles are further atomized to an amorphous or crystallite size of about 2 to 6 nm, the density of the negative electrode active material increases, whereby it may approach a theoretical density, and pores may be remarkably reduced. As a result, the density of the matrix is enhanced and the strength is fortified to prevent cracking; thus, the initial efficiency or cycle lifespan characteristics of the secondary battery may be further enhanced.

In addition, the negative electrode active material may comprise a compound represented by $SiO_x$ ($0.3 \leq x \leq 1.6$) or a silicon oxide compound such as silicon dioxide. Specifically, the compound may be $SiO_x$ ($0.5 \leq x \leq 1.6$), silicon dioxide, or a mixture thereof. More specifically, it may be $SiO_x$ ($0.7 \leq x \leq 1.2$), silicon dioxide, or a mixture thereof. As such a silicon oxide compound is employed, it is possible to enhance the capacity and to reduce the volume expansion when applied to a secondary battery.

The silicon oxide compound may be amorphous or may have a structure in which silicon particles (amorphous) of several nanometers to several tens of nanometers are distributed in the silicon oxide compound when observed by energy-dispersive X-ray spectroscopy (EDX) or a transmission electron microscope.

The silicon oxide compound can be obtained by a method comprising cooling and precipitating a silicon oxide gas produced by heating a mixture of silicon dioxide and submicron silicon powder or silicon fine particles having a size of 50 nm or less.

The silicon oxide compound is amorphous and may cause an irreversible reaction with lithium ions during discharge to form Li-Si-O or Si + Li$_2$O. Thus, as the content of silicon dioxide in the silicon oxide compound increases, the initial irreversible reaction may increase, and the initial efficiency may decrease.

The silicon oxide compound may be employed in an amount of 5% by mole to 20% by mole based on the total negative electrode active material. If the content of the silicon oxide compound is less than 5% by mole, the volume expansion and lifespan characteristics of the secondary battery may be deteriorated. If it exceeds 20% by mole, the initial irreversible reaction of the secondary battery may increase.

According to an embodiment of the present invention, the negative electrode active material may not comprise silicon dioxide. The reason is that, when silicon is intercalated, the production of lithium silicate is suppressed, which may improve the initial efficiency; however, if silicon dioxide is contained, when silicon dioxide reacts with lithium, it may cause an irreversible reaction to produce lithium silicate, thereby reducing the initial efficiency.

In addition, the negative electrode active material may comprise a silicate comprising magnesium, calcium, aluminum, or a combination thereof. The magnesium, calcium, aluminum, or a combination thereof may be employed in a doped form. Specifically, the negative electrode active material may comprise a silicate comprising magnesium in which magnesium is employed in a doped form.

According to an embodiment of the present invention, the silicate comprising magnesium may comprise MgSiO$_3$ crystals, Mg$_2$SiO$_4$ crystals, or a mixture thereof.

In addition, according to an embodiment, the silicate comprising magnesium may comprise MgSiO$_3$ crystals and may further comprise Mg$_2$SiO$_4$ crystals.

In the silicate comprising magnesium, when magnesium is doped, for example, when SiO and Mg are reacted at a ratio of 1:1, only Si and MgO are present thermodynamically if the elements are uniformly distributed. However, if the element concentration distribution is not uniform, not only Si and MgO but also other substances such as unreacted SiO and metallic Mg may be present.

According to an embodiment of the present invention, although the negative electrode active material may comprise Mg$_2$SiO$_4$ crystals and MgO, it may substantially comprise a large amount of MgSiO$_3$ crystals in order to enhance the charge/discharge capacity and initial efficiency.

In the present specification, the phrase "substantially comprise a large amount of," or "substantially comprise," a component means to comprise the component as a main component or mainly comprise the component.

Specifically, that a large amount of MgSiO$_3$ is comprised means that a larger amount of MgSiO$_3$ crystals than that of Mg$_2$SiO$_4$ crystals is comprised. For example, in an X-ray diffraction analysis, the ratio (IF/IE) of an intensity (IF) of the X-ray diffraction peak corresponding to Mg$_2$SiO$_4$ crystals appearing in the range of $2\theta$=22.3° to 23.3° to an intensity (IE) of the X-ray diffraction peak corresponding to MgSiO$_3$ crystals appearing in the range of $2\theta$=30.5° to 31.5° is 1 or less.

In the silicate, the content of magnesium relative to SiO$_x$ may have an impact on the initial discharge characteristics or cycle characteristics during charging and discharging.

Silicon in the SiO$_x$ may be alloyed with lithium atoms to significantly enhance the initial discharge characteristics. Meanwhile, if magnesium silicate of MgSiO$_3$ crystals is employed in a substantially large amount, the fineness of the silicon fine particles is maintained, which may further fortify the strength of the matrix. In addition, the density may be increased, thereby forming a dense matrix. As a result, the enhancement of the initial efficiency or the improvement effect of the cycle during charging and discharging may be amplified. However, if Mg$_2$SiO$_4$ crystals are employed in an excessive amount, the size of the silicon fine particles increases, which may reduce the strength or density of the matrix, and the alloying of silicon atoms and lithium atoms decreases, which may cause a decrease in the initial discharge characteristics of the secondary battery.

If the negative electrode active material comprises a silicate comprising magnesium, a chemical reaction between the negative electrode active material and the binder may be suppressed as compared with the case where lithium is doped instead of magnesium. Thus, the use of such a negative electrode active material may enhance the safety of the negative electrode active material composition, which improves not only the safety of the negative electrode but also the cycle characteristics of the secondary battery. In addition, it is understood that since the silicate comprising magnesium hardly reacts with lithium ions, when applied to an electrode, the expansion/contraction of the electrode is reduced when lithium ions are rapidly increased, thereby enhancing the cycle characteristics. In addition, it is understood that the strength of the matrix, which is a continuous phase surrounding the silicon fine particles, can be fortified by the silicate.

If the negative electrode active material comprises a silicate comprising magnesium, the doping amount, that is, the content of magnesium may be 3% by weight to 15% by weight, specifically, 4% by weight to 12% by weight, based on the total weight of the negative electrode active material. If the content of magnesium is 3% by weight or more, an enhancement in the initial efficiency of the secondary battery can be achieved. If it is 15% by weight or less, it may be advantageous in terms of cycle characteristics and handling safety of the secondary battery.

According to another embodiment of the present invention, if the negative electrode active material comprises a silicate comprising calcium, aluminum, or a combination thereof, the doping amount, that is, the content of calcium or aluminum may be 3% by weight to 15% by weight, specifically, 4% by weight to 12% by weight, based on the total weight of the negative electrode active material.

According to an embodiment of the present invention, the silicate comprising magnesium, calcium, or aluminum may be represented by the following Formula 1:

$$[\text{Formula 1}] \qquad M_xSiO_y$$

In Formula 1, M is at least one metal selected from the group consisting of Mg, Ca, and Al, $0.5 \leq x \leq 2$, and $2.5 \leq y \leq 4$.

The silicate of Formula 1 is an oxide having a negative Gibbs free energy thermodynamically than a silicon oxide compound, is amorphous, and is stable to lithium, so that it may serve to suppress the initial irreversible reaction.

According to an embodiment of the present invention, the silicon-based negative electrode active material may comprise a carbon layer comprising a carbon film on its surface in which the carbon layer may comprise at least one selected from the group consisting of a carbon nanofiber, graphene, graphene oxide, and reduced graphene oxide.

Specifically, it is possible to grow a carbon layer that is flexible for volume expansion by virtue of excellent conductivity, specifically, at least one selected from the group consisting of a carbon nanofiber, graphene, graphene oxide, and reduced graphene oxide, directly on the surface of the silicon-based negative electrode active material, for example, at least one negative electrode active material selected from the group consisting of silicon fine particles, a compound represented by $SiO_x$ ($0.3 \leq x \leq 1.6$), silicon dioxide, and a silicate comprising magnesium, calcium, aluminum, or a combination thereof. As a result, it is possible to suppress the volume expansion of the negative electrode active material, to reduce a phenomenon in which the silicon-based negative electrode active material is pressed, and to reduce the generation of an SEI layer formed by a reaction of the silicon-based negative electrode active material with the electrolyte due to the carbon layer.

The carbon layer may comprise carbon in an amount of 2% by weight to 10% by weight, specifically, 4% by weight to 8% by weight, based on the total weight of the negative electrode active material. If the carbon content is less than 2% by weight, the conductivity of the negative electrode may be deteriorated. If it exceeds 10% by weight, the carbon content may be excessively increased, which may reduce the capacity of the negative electrode, so that it may be difficult to achieve an enhancement of energy density as desired in the present invention. The method for forming the carbon layer may be a method of chemical vapor deposition (CVD) in an organic gas and/or vapor, or a method of introducing an organic gas and/or vapor into the reactor during thermal treatment.

In addition, the cumulative 50% average particle diameter ($D_{50}$) in the particle distribution of the negative electrode active material on which the carbon layer is formed may be 0.5 $\mu$m to 15 $\mu$m, specifically, 2 $\mu$m to 10 $\mu$m, more specifically, 3 $\mu$m to 10 $\mu$m or 4 $\mu$m to 8 $\mu$m. If $D_{50}$ is too small, the bulk density becomes too small, which may deteriorate the charge and discharge capacity per unit volume. On the other hand, if $D_{50}$ is too large, it is difficult to prepare an electrode layer of a secondary battery, which may cause a problem in that it may be peeled off from the electrical power collector. Meanwhile, $D_{50}$ is a value measured as a weight average value $D_{50}$ (i.e., a particle size or median diameter when the cumulative weight is 50%) in particle size distribution measurement according to a laser beam diffraction method.

According to an embodiment of the present invention, the carbon layer may have an average thickness of 10 nm to 200 nm, specifically, 20 nm to 200 nm.

If the average thickness of the carbon layer is 10 nm or more, conductivity may be enhanced. If it is 200 nm or less, a decrease in capacity of the secondary battery may be suppressed. The average thickness of the carbon layer may be measured, for example, by the following procedure.

First, the negative electrode active material is observed at an arbitrary magnification by a transmission electron microscope (TEM). The magnification is preferably, for example, a degree that can be confirmed with the naked eyes. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

In addition, when the silicon-based negative electrode active material according to an embodiment of the present invention is used, the battery capacity per unit weight of the negative electrode active material may be 1,500 to 3,000 mAh/g, so that it is possible to provide a secondary battery having high conductivity with relatively small volume expansion and enhanced cycle characteristics. In addition, if it is used in combination with a carbon-based negative electrode active material, Coulombic efficiency and cycle characteristics may be enhanced.

The positive electrode adopted in the secondary battery may comprise a metal oxide active material in which the metal oxide active material may specifically comprise an oxide having a spinel structure comprising lithium cobaltate, lithium manganate, or a mixture thereof.

The secondary battery according to an embodiment of the present invention satisfies the following Relationship 1, and the lithium metal plate for lithium doping may have a thickness (TL) of 10 μm to 30 μm and a density (DA) of 0.3 g/cm$^3$ to 0.8 g/cm$^3$.

[Relationship 1]

$$0.5 < \{TA \times DA \times CA0(100 - ICE)/100\}/CLt \times (CLa/CLt)\} \times TL \times DL < TL$$

$$< \{TA \times DA \times CA0(100 - ICE)/100\}/CLt \times (CLa/CLt) \times DL$$

In Relationship 1,

TA: thickness of the negative electrode (μm)
DA: density of the negative electrode (g/cm$^3$)
ICE: initial efficiency (%)
CA0: first charge capacity of the negative electrode (mAh/g) CLt: theoretical capacity of lithium (3,600 mAh/g)
CLa: actual capacity of lithium (mAh/g)
TL: thickness of the lithium metal plate (μm)
DL: density of the lithium metal plate (0.53 g/cm$^3$).

In addition, the thickness of the lithium metal plate may be specifically 15 μm to 25 μm. A lithium metal plate with a large surface area is preferable when the predoping rate is taken into consideration. A lithium metal plate having a small surface area may be preferable when the handling convenience, productivity, and predoping process environments of the lithium metal plate are taken into consideration. If the thickness of the lithium metal plate satisfies the above range, it may be preferable in terms of the suppression of lithium residual, predoping rate, and productivity.

[Process for manufacturing a secondary battery]

The process for manufacturing a secondary battery according to an embodiment of the present invention may comprise (1-1) applying a negative electrode active material composition comprising a silicon-based negative electrode active material to a negative electrode current collector to prepare a negative electrode; (1-2) interposing a separator between the negative electrode and a lithium metal plate to prepare a cell; (1-3) electrochemically activating the cell obtained in step (1-2) to predope the negative electrode with lithium; and (1-4) manufacturing a secondary battery using the negative electrode predoped with lithium.

Step (1-1) may comprise applying a negative electrode active material composition comprising a silicon-based negative electrode active material to a negative electrode current collector and then rolling and drying it, which may be carried out by a commonly used method.

Specifically, the negative electrode is prepared by applying a negative electrode active material composition in which a negative electrode active material, a conductive material, and a binder are mixed to a negative electrode current collector and then drying it. The negative electrode may be prepared by a method commonly used in the art. For example, a negative electrode active material composition (slurry) is prepared by mixing and stirring a binder, a solvent, and, if necessary, a conductive material and a dispersant with the negative electrode active material according to an embodiment of the present invention, which may be then applied to a current collector, rolled, and dried to prepare a negative electrode.

The silicon-based negative electrode active material described above may be used as the negative electrode active material.

In the process for manufacturing a secondary battery according to an embodiment of the present invention, the silicon-based negative electrode active material may be obtained by mixing a silicon powder and a silicon dioxide powder to obtain a silicon-silicon oxide raw material powder mixture; heating and depositing the raw material powder mixture to obtain a silicon oxide composite; and pulverizing and classifying the silicon oxide composite to obtain a silicon-based negative electrode active material.

Specifically, in the process for preparing the silicon-based negative electrode active material, the first step may comprise mixing a silicon powder and a silicon dioxide powder to obtain a silicon-silicon oxide raw material powder mixture.

When the silicon powder and the silicon dioxide powder are mixed, the mixing molar ratio of the silicon dioxide powder to the silicon powder, that is, the molar ratio of silicon dioxide powder/silicon powder is greater than 0.9 to less than 1.1, specifically, 1.01 to 1.08.

In the process for preparing the silicon-based negative electrode active material, the second step may comprise heating and depositing the raw material powder mixture to obtain a silicon oxide composite.

The heating and deposition of the raw material powder mixture in the second step may be carried out at 500°C to 1,600°C, specifically, 600°C to 1,500°C. If the heating and deposition temperature is lower than 500°C, it may be difficult for the reaction to be carried out, thereby lowering the productivity. If it exceeds 1,600°C, the raw material powder mixture may be melted, thereby reducing the reactivity.

In the process for preparing the silicon-based negative electrode active material, the third step may comprise pulverizing and classifying the silicon oxide composite to obtain a silicon-based negative electrode active material.

The pulverization may be carried out by pulverizing and classifying the negative electrode active material to have an average particle diameter ($D_{50}$) of 0.5 $\mu$m to 15 $\mu$m, specifically, 2 $\mu$m to 10 $\mu$m, more specifically, 4 $\mu$m to 8 $\mu$m. The pulverization may be carried out using a pulverizer or a sieve commonly used.

In addition, according to an embodiment of the present invention, the process may further comprise cooling the silicon oxide composite between the second step and the third step.

The cooling may be carried out at room temperature while an inert gas is injected. The inert gas may be at least one selected from carbon dioxide gas, argon (Ar), water vapor ($H_2O$), helium (He), nitrogen ($N_2$), and hydrogen ($H_2$).

Meanwhile, according to an embodiment of the present invention, the process may further comprise forming a carbon layer comprising a carbon film on the surface of the negative electrode active material by using a chemical thermal decomposition deposition method after the pulverization and classification of the third step.

In the chemical thermal decomposition deposition method, a carbon layer comprising a carbon film may be formed on the surface of the negative electrode active material by adding thereto at least one carbon source gas selected from a compound represented by the following Formula 2; a compound represented by the following Formula 3; a compound represented by the following Formula 4; and at least one hydrocarbon gas selected from acetylene, benzene, toluene, and xylene, and carrying out a reaction in a gaseous state at 600 °C to 1,200 °C.

[Formula 2] $\quad$ $C_nH_{(2n+2-A)}[OH]_A$

in Formula 2, n is an integer of 1 to 20, and A is 0 or 1,

[Formula 3] $\quad$ $C_mH_{2m}$

in Formula 3, m is an integer of 2 to 6,

[Formula 4] $\quad$ CxHyOz

in Formula 4, x is an integer of 1 to 20, y is an integer of 0 to 20, and z is 1 or 2.

The compound represented by Formula 2 may comprise, for example, at least one selected from methane ($CH_4$), ethane ($C_2H_6$), propane ($C_3H_8$), methanol ($CH_3OH$), ethanol ($C_2H_5OH$), and propanol ($C_3H_8O$). The compound represented by Formula 3 may comprise at least one selected from methylene ($CH_2$), ethylene ($C_2H_4$), and propylene ($C_3H_6$). Meanwhile, the compound represented by Formula 4 is an oxygen-containing gas and may comprise, for example, at least one selected from carbon monoxide (CO) and carbon dioxide ($CO_2$).

In addition, when the carbon layer is formed, an inert gas comprising at least one selected from carbon dioxide gas, argon (Ar), water vapor ($H_2O$), helium (He), nitrogen ($N_2$), and hydrogen ($H_2$) may be injected. According to an embodiment, if water vapor is contained when the carbon layer is formed, the negative electrode active material may exhibit higher electrical conductivity. Specifically, if water vapor is contained when the carbon layer is formed, a highly crystalline carbon film may be formed on the surface of the negative electrode active material by a reaction with the gas mixture, and high electrical conductivity may be exhibited even when a smaller amount of carbon is coated. The content of water vapor in the gas mixture is not particularly limited. For example, it may be 0.01% by volume to 10% by volume based on 100% by volume of the total carbon source gas.

According to an embodiment, a mixed gas of $CH_4$ and $CO_2$ or a mixed gas of $CH_4$, $CO_2$, and $H_2O$ may be used as the carbon source gas when the carbon layer is formed. When a mixture gas of $CH_4$ and $CO_2$ is used, the molar ratio of $CH_4$:$CO_2$ may be about 1:0.20 to 0.50, specifically, about 1:0.25 to 0.45, more specifically, about 1:0.30 to 0.40. When a mixture gas of $CH_4$, CO, and $H_2O$ is used, the molar ratio of $CH_4$:$CO_2$:$H_2O$ may be about 1:0.20 to 0.50:0.01 to 1.45, specifically, about 1:0.25 to 0.45:0.10 to 1.35, more specifically, about 1:0.30 to 0.40:0.50 to 1.0.

According to another embodiment, when the carbon layer is formed, CO, $CO_2$, or a combination thereof may be used as the carbon source gas.

According to another embodiment, when the carbon layer is formed, a carbon source gas containing $CH_4$ and $N_2$ as an inert gas may be used. The molar ratio of $CH_4$ and $N_2$ in the mixed gas may be about 1:0.20 to 0.50, specifically, about 1:0.25 to 0.45, more specifically, about 1:0.30 to 0.40.

According to an embodiment, the inert gas may not be contained.

In addition, the thermal treatment temperature, the composition of the gas mixture, and the like during the reaction may be selected in view of the desired amount of a carbon film.

When the carbon layer is formed, the thermal treatment temperature may be 600°C to 1,200°C, specifically, 700°C to 1,100°C, more specifically, 700°C to 1,000°C.

In addition, the pressure during the thermal treatment may be controlled by adjusting the amount of the gas mixture introduced. For example, the pressure during the thermal treatment may be 1 atm or more, for example, 1 atm to 5 atm, but it is not limited thereto.

In addition, the thermal treatment time is not limited, but it may be appropriately adjusted depending on the thermal treatment temperature, the pressure during the thermal treatment, the composition of the gas mixture, and the desired amount of carbon coating. For example, the thermal treatment time may be 10 minutes to 100 hours, specifically, 30 minutes to 90 hours, more specifically, 50 minutes to 40 hours. According to an embodiment, as the thermal treatment time increases, the thickness of the carbon film formed may increase. When the thickness is adjusted to an appropriate level, the electrical properties of the negative electrode active material may be enhanced.

According to an embodiment of the present invention, it is preferable that a carbon film is formed uniformly and thinly over the entire surface of the negative electrode active material and that substantially a large amount of a carbon nanofiber, graphene, graphene oxide, or reduced graphene oxide is formed as the carbon film.

In addition, a carbon layer comprising a uniform carbon film may be formed on the surface of the negative electrode active material even at a relatively low temperature through a gas phase reaction of the carbon source gas. In the negative electrode active material thus formed, the detachment of the carbon film does not readily take place. In addition, a carbon film having high crystallinity may be formed through a gas phase reaction; thus, when it is used as a negative electrode active material, the electrical conductivity of the negative electrode active material can be enhanced without changing the structure.

The carbon layer may comprise at least one selected from the group consisting of a carbon nanofiber, graphene, graphene oxide, and reduced graphene oxide.

The structure of the carbon layer may be a layer, a nanosheet type, or a structure in which several flakes are mixed.

The layer may refer to the form of a film in which graphene is continuously and uniformly formed on the surface of at least one selected from silicon fine particles, a silicon oxide compound, magnesium silicate, and a reduction product thereof.

In addition, the nanosheet may refer to a case where a carbon nanofiber or a graphene-containing material is formed in an irregular state on the surface of at least one selected from the group consisting of silicon fine particles, a compound represented by $SiO_x$ ($0.3 \leq x \leq 1.6$), silicon dioxide, and a silicate comprising magnesium, calcium, aluminum, or a combination thereof.

In addition, the flake may refer to a case where a part of the nanosheet or membrane is damaged or deformed.

After the carbon layer is formed, the process may further comprise pulverization and classification. The average particle diameter ($D_{50}$) of the negative electrode active material on which the carbon layer has been formed may be 0.5 $\mu$m to 15 $\mu$m, specifically, 2 $\mu$m to 10 $\mu$m, more specifically, 3 $\mu$m to 10 $\mu$m or 4 $\mu$m to 8 $\mu$m. If the average particle diameter ($D_{50}$) of the negative electrode active material on which the carbon layer has been formed is less than 0.5 $\mu$m, its bulk density is too small, and the charge and discharge capacity per unit volume may be deteriorated. On the other hand, if the average particle diameter ($D_{50}$) exceeds 15 $\mu$m, it is difficult to prepare an electrode layer, so that it may be peeled off from the electrical power collector. The average particle diameter ($D_{50}$) is a value measured as a weight average value $D_{50}$, i.e., a particle diameter or median diameter when the cumulative weight is 50% in particle size distribution measurement according to a laser beam diffraction method.

The average particle diameter ($D_{50}$) of the negative electrode active material on which the carbon layer has been formed may be achieved by pulverization as described above. In addition, after pulverization to the average particle diameter ($D_{50}$), classification may be carried out to adjust the particle size distribution, for which dry classification, wet classification, or filtration may be used. In the dry classification, the steps of dispersion, separation (separation of fine particles and defective particles), collection (separation of solids and gases), and discharge are carried out sequentially or simultaneously using an air stream, in which pretreatment (adjustment of moisture, dispersibility, humidity, and the like) can be carried out prior to classification so as not to decrease the classification efficiency by interference between particles, particle shape, airflow disturbance, velocity distribution, and influence of static electricity, and the like, thereby to adjust the moisture or oxygen concentration in the air stream used. In addition, a desired particle size distribution may be obtained by carrying out pulverization and classification at one time.

If a negative electrode active material having the average particle diameter is achieved by the pulverization and classification treatment, the initial efficiency or cycle characteristics may be enhanced by about 10% to 20% as compared with before classification. The negative electrode active material upon the pulverization and classification may have a $D_{max}$ of about 10 $\mu$m or less. In such a case, the specific surface area of the negative electrode active material may decrease; as a result, lithium supplemented to the SEI layer may decrease.

In addition, the negative electrode active material may have a specific surface area of 2 $m^2/g$ to 20 $m^2/g$. If the specific surface area of the negative electrode active material is less than 2 $m^2/g$, the rate characteristics of the secondary battery may be deteriorated. If it exceeds 20 $m^2/g$, the contact area with the electrolyte increases, which may cause a problem in that the decomposition reaction of the electrolyte may be expedited or a side reaction of the battery may take place. The specific surface area of the negative electrode active material may be specifically 3 $m^2/g$ to 15 $m^2/g$, more specifically, 3 $m^2/g$ to 10 $m^2/g$. The specific surface area can be measured by the BET method by nitrogen adsorption. For example, a specific surface area measuring device (Macsorb HM (model 1210) of MOUNTECH, Belsorp-mini II of MicrotracBEL, or the like) generally used in the art may be used.

The negative electrode active material may have a specific gravity of 1.8 $g/cm^3$ to 3.2 $g/cm^3$, specifically, 2.5 $g/cm^3$ to 3.2 $g/cm^3$. As the specific gravity increases, the number of pores in the negative electrode active material is reduced, whereby conductivity can be enhanced, and the strength of the matrix is fortified, whereby initial efficiency or cycle lifespan characteristics can be enhanced. In the present specification, specific gravity may refer to true specific gravity, density, or true density. For the measurement of the specific gravity, for example, the measurement of specific gravity by a dry density meter, Acupick II1340 manufactured by Shimadzu Corporation may be used as a dry density meter. The purge gas to be used may be helium gas, and the measurement may be carried out after 200 times of purge in a sample holder set at a temperature of 23°C.

According to an embodiment of the present invention, in the negative electrode active material comprising the carbon layer, a carbon layer that is excellent in conductivity and flexible in volume expansion, particularly a carbon nanofiber or a graphene-containing material, is directly grown on the negative electrode active material, so that it is possible to suppress volume expansion and to reduce a phenomenon in which silicon fine particles, a silicon oxide compound, or a silicate are pressed and contracted. In addition, since the direct reaction of silicon contained in the negative electrode active material with the electrolyte can be controlled by the carbon nanofiber or graphene, it is possible to reduce the formation of an SEI layer of the electrode. If a negative electrode active material comprising a carbon layer as described above is used, it is possible to suppress structural collapse due to volume expansion of silicon fine particles, a silicon oxide compound, and a silicate even if a binder is not used in the preparation of the negative electrode active material composition, and it can be advantageously used in the manufacture of an electrode and a lithium secondary battery having excellent electrical conductivity and capacity characteristics by minimizing an increase in resistance.

In addition, according to an embodiment of the present invention, the negative electrode active material may further comprise a carbon-based negative electrode material.

Specifically, the negative electrode active material may be used as a mixture of the silicon-based negative electrode active material and the carbon-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material, for example, a graphite-based negative electrode material, may be 30% by weight to 95% by weight, specifically, 30% by weight to 90% by weight, more specifically, 50% by weight to 80% by weight, based on the total weight of the negative electrode active material. In particular, if the negative electrode active material comprises silicon fine particles, the silicon fine particles do not cause volumetric expansion; thus, a secondary battery having excellent cycle characteristics can be obtained when the carbon-based negative electrode material is mixed for use.

The binder is not particularly limited. For example, it may be at least one selected from the group consisting of a fluorine-based resin such as a polyvinylidene fluoride-hexafluoropropylene copolymer (PVDF-co-HEP), polyvinylidenefluoride, polytetrafluoroethylene; a rubber-based material such as fluororubber and styrene-butylene rubber (SBR); a polyolefin such as polyethylene and polypropylene; an acrylic resin; and a polyimide-based resin. Since the silicon-based negative electrode active material has a large volume change during charging and discharging, a material with excellent adhesion may be more preferable. For example, it may comprise a polyimide-based resin comprising polyimide, polyamide-imide, or a mixture thereof. In addition, when a negative electrode is prepared, the amount of blending with the binder may be determined in view of the type, particle size, shape, and blending composition of the negative electrode active material of the present invention. Good cycle characteristics of the secondary battery can be obtained by appropriately blending in view of the strength and adhesiveness of the negative electrode.

The conductive material is not particularly limited as long as it has conductivity without causing a chemical change in the battery. For example, it may be graphite such as natural graphite and synthetic graphite; carbon black such as acetylene black, Ketjenblack, channel black, furnace black, lamp black, and thermal black; conductive fibers such as carbon fibers and metal fibers; metal powder such as fluorocarbon, aluminum, and nickel powder; conductive whisker such as zinc oxide and potassium titanate; conductive metal oxides such as titanium oxide; a conductive material such as polyphenylene derivatives.

The dispersant may be an aqueous dispersant or an organic dispersant such as N-methyl-2-pyrrolidone.

The negative electrode current collector is not particularly limited. Examples thereof include copper foil, stainless steel foil, and titanium foil. In addition, a current collector whose surface is embossed or a porous current collector, for example, expanded metal, meshed or punched metal may be used.

In addition, the process for manufacturing a secondary battery may comprise step (1-2) of interposing a separator between the negative electrode and a lithium metal plate to prepare a cell.

The lithium metal plate may have a thickness of 10 μm to 30 μm, specifically, 15 μm to 25 μm. A lithium metal plate with a large surface area is preferable when the predoping rate is taken into consideration. A lithium metal plate having a small surface area may be preferable when the handling convenience, productivity, and predoping process environments of the lithium metal plate are taken into consideration. If the thickness of the lithium metal plate satisfies the above range, it may be preferable in terms of the suppression of lithium residual, predoping rate, and productivity. In addition, the lithium metal plate may have a density of 0.3 g/cm$^3$ to 0.8 g/cm$^3$.

Meanwhile, the separator is a conventional porous polymer film used as a conventional separator, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, which may be used alone or as laminated. In addition, an insulating thin film having high ion permeability and mechanical strength may be used. The separator may comprise a safety reinforced separator (SRS) in which a ceramic material is thinly coated on the surface of the separator.

In addition, a conventional porous nonwoven fabric, for example, a nonwoven fabric made of a high-melting point glass fiber, a polyethylene terephthalate fiber, or the like may be used, but it is not limited thereto. The separator may have a thickness of 10 μm to 30 μm, specifically, 15 μm to 25 μm.

The process for manufacturing the secondary battery may comprise step (1-3) of electrochemically activating the cell obtained in step (1-2) to predope the negative electrode with lithium.

In the present specification, predoping refers to doping lithium by occluding and supporting lithium in the negative electrode before normal charging and discharging between the positive electrode and the negative electrode.

It is important to make the irreversible capacity of the negative electrode active material as small as possible in order to obtain a secondary battery having a high energy density as desired in the present invention. Since it is theoretically impossible to reduce more than a certain level, the high energy density may be enhanced by predoping the negative electrode with lithium. The predoping compensates for the irreversible capacity, or lithium required for charging and discharging can be contained in the negative electrode even when an active material that does not contain lithium is used in the positive electrode.

Thus, the performance of the secondary battery can be enhanced.

As a predoping method according to an embodiment of the present invention, a method of doping lithium onto a negative electrode active material may be used in which a lithium metal plate adopted as a counter electrode is electrochemically activated in an electrolyte solution used in a secondary battery. The predoping may comprise predoping the negative electrode with lithium in an amount corresponding to the initial irreversible capacity of the negative electrode by causing lithium adsorption and desorption while electrochemically contacting the negative electrode and the lithium metal plate. Specifically, once a negative electrode and a lithium metal plate as a counter electrode have been adopted and a separator has been interposed between the negative electrode and the lithium metal plate to prepare a cell, it is then electrochemically activated in a liquid electrolyte to predope the negative electrode with an amount of lithium corresponding to the first irreversible capacity. The liquid electrolyte may comprise a non-aqueous electrolyte, a polymer electrolyte, or a polymer gel electrolyte.

In addition, the electrochemical activation may be carried out by charging and discharging the cell. Although not particularly limited, for example, after the voltage reaches 0.005 V at a constant current of 0.1 C, charging is performed until the current becomes 0.005 C at a constant voltage, and discharging is performed until the voltage becomes 1.5 V at a constant current of 0.1 C.

As described above, as a separator is interposed between the negative electrode and the lithium metal plate in the liquid electrolyte, the negative electrode is predoped with lithium through electrochemical contact of the negative electrode and the lithium metal plate while the negative electrode and the lithium metal plate are not in direct contact; thus, it is possible to solve the problem that needle-shaped crystals (dendrites) formed by directly attaching or depositing the lithium metal plate to the negative electrode have an adverse impact on the separator. As a result, the safety of the secondary battery can be secured.

In addition, the predoping method according to another embodiment of the present invention may be a method in which excess lithium (the amount of irreversible capacity that remains in the negative electrode) is removed by dedoping lithium again after the doping. The predoping may comprise doping the negative electrode with lithium in an amount corresponding to the initial irreversible capacity of the negative electrode by causing lithium adsorption and desorption while the negative electrode and the lithium metal plate are electrochemically contacted for doping lithium; and then releasing (dedoping) the amount of lithium other than the amount of the initial irreversible capacity of the negative electrode.

Specifically, once a negative electrode and a lithium metal plate as a counter electrode have been adopted and a separator has been interposed between the negative electrode and the lithium metal plate to prepare a cell, it is then electrochemically activated in a liquid electrolyte, for example, a non-aqueous liquid electrolyte, to predope the negative electrode with an amount of lithium corresponding to the first irreversible capacity; and then releasing (dedoping) the amount of lithium other than the amount of the initial irreversible capacity of the negative electrode. If the negative electrode is predoped with an amount of lithium corresponding to the irreversible capacity by the above predoping method, particularly, by dedoping, it is possible to achieve an initial efficiency close to 100%. As a result, the capacity ratio of negative electrode/positive electrode (N/P ratio) may approach 1.0, which may enhance the capacity of the secondary battery itself. In addition, although a large exothermic reaction may be accompanied during predoping with lithium, the current during doping with lithium may be controlled, thereby controlling its rate, which may be a great advantage in terms of safety.

Thus, according to the present invention, as the negative electrode is electrochemically doped, or doped and then dedoped, with lithium according to the predoping method, it is possible to predope the negative electrode with lithium in an amount corresponding to the irreversible capacity. As a result, it is possible to reduce the volume expansion of the negative electrode involved in the occlusion and release of lithium. In addition, since the doping speed can be controlled by controlling the current, the safety of doping can also be secured by preventing the generation of a large amount of heat. In particular, when doping in a large amount is carried out, the method may be advantageous for mass production since the temperature can be controlled.

Lithium salts that are commonly used as an electrolyte for lithium secondary batteries may be employed as an electrolyte in the present invention without limitation. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

Organic solvents that are commonly used in a liquid electrolyte for lithium secondary batteries may be employed in the liquid electrolyte of the present invention without limitation. As a representative, any one or a mixture of two or more selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfuroxide, acetonitrile, dimethoxyethane, diethoxyethane, vinylene carbonate, sulfolane, gamma-butyrolactone, propylene sulfite, methyl acetate, methyl formate, and tetrahydrofuran may be typically used. The concentration of the liquid electrolyte is not particularly limited, but it may be, for example, 0.5 to 2 moles/liter. It is preferable that the liquid electrolyte has a moisture content of 100 ppm or less. Meanwhile, the term "non-aqueous liquid electrolyte" used in the present specification refers to a concept covering not only a non-aqueous liquid electrolyte and an organic liquid electrolyte, but also a gel-like and solid electrolyte.

In the secondary battery comprising a negative electrode predoped with lithium and comprising a silicon-based negative electrode active material according to an embodiment of the present invention, its energy density can be significantly enhanced, and its cycle characteristics and rate characteristics can be enhanced. In particular, the secondary battery may be further enhanced in initial discharge capacity and capacity retention rate.

The process for manufacturing a secondary battery may comprise step (1-4) of manufacturing a secondary battery using the negative electrode predoped with lithium.

Specifically, upon the electrochemical activation in step (1-3), the cell is separated to manufacture a secondary battery using a negative electrode predoped with lithium, a positive electrode comprising a positive electrode active material, and a separator.

When the secondary battery is manufactured, the positive electrode active material employed in the positive electrode is not particularly limited as long as it is a material capable of electrochemically occluding and releasing lithium. For example, it may comprise a metal oxide active material comprising lithium that can be released electrochemically. Specifically, it may comprise an oxide having a spinel structure comprising lithium cobaltate, lithium manganate, or a mixture thereof.

In addition, the positive electrode active material may comprise at least one selected from the group consisting of lithium composite cobalt oxide, lithium composite nickel oxide, lithium composite manganese oxide, and lithium composite titanium oxide. An active material in which at least one different metal element is added to the composite oxide may be used. In addition, at least one selected from the group consisting of at least one metal oxide selected from the group consisting of manganese, vanadium, and iron, a disulfide-based compound, a polyacene-based compound, and activated carbon may be used as what does not contain electrochemically releasable lithium

In addition, a commonly used separator may be used as the separator, and the separator described in steps (1-2) may be used.

The process for manufacturing a secondary battery according to another embodiment comprises (2-1) applying a negative electrode active material composition comprising a silicon-based negative electrode active material to a negative electrode current collector to prepare a negative electrode; (2-2) placing the negative electrode and a lithium metal plate in a reactor and then carrying out a redox reaction to predope the negative electrode with lithium; and (2-3) sequentially stacking the negative electrode predoped with lithium, a separator, and a positive electrode comprising a metal oxide active material to prepare an electrode.

Step (2-1) is a step of applying a negative electrode active material composition comprising a silicon-based negative electrode active material to a negative electrode current collector to prepare a negative electrode. In addition, step (2-1) may further comprise, after the negative electrode active material composition has been applied to the negative electrode current collector, rolling and drying it, which may be carried out by a commonly used method.

In the process for preparing a secondary battery according to an embodiment of the present invention, the method of preparing the silicon-based negative electrode active material is as described above.

In addition, step (2-2) is a step of placing the negative electrode and a lithium metal plate in a reactor and carrying out a redox reaction to predope the negative electrode with lithium.

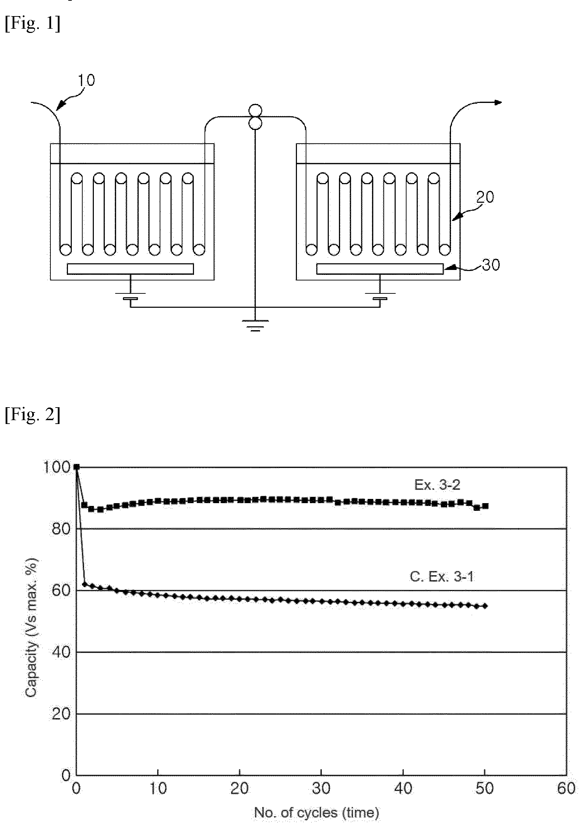

Specifically, referring to Fig. 1, once the negative electrode (10) prepared in step (2-1) and a lithium metal plate (30) have been placed in a reactor, a redox reaction may be carried out. In such an event, the redox reaction may be carried out in a liquid electrolyte (20). The liquid electrolyte (20) may comprise a non-aqueous electrolyte, a polymer electrolyte, or a polymer gel electrolyte. The redox reaction is carried out, for example, by doping the negative electrode with lithium through a reduction reaction at 0.0003 to 0.001 V with a lithium metal plate in a non-aqueous liquid electrolyte, and by carrying out an oxidation reaction until it becomes 1.0 to 2.0 V for dedoping.

The lithium metal plate may have a thickness of 10 $\mu$m to 30 $\mu$m, specifically, 15 $\mu$m to 25 $\mu$m. A lithium metal plate with a large surface area is preferable when the predoping rate is taken into consideration. A lithium metal plate having a small surface area may be preferable when the handling convenience, productivity, and predoping process environments of the lithium metal plate are taken into consideration. If the thickness of the lithium metal plate satisfies the above range, it may be preferable in terms of the suppression of lithium residual, predoping rate, and productivity. In addition, the lithium metal plate may have a density of 0.3 g/cm$^3$ to 0.8 g/cm$^3$.

The negative electrode may be predoped with lithium by the redox reaction.

According to an embodiment of the present invention, it is important to make the irreversible capacity of the negative electrode active material as small as possible in order to obtain a secondary battery having a high energy density. Accordingly, a negative electrode comprising a silicon-based negative electrode active material is predoped with lithium in the present invention, whereby it is possible to lower the initial irreversible capacity of the negative electrode, to prevent the penetration of metal ions of the positive electrode into the SEI of the negative electrode surface, and to enhance energy density. The predoping compensates for the irreversible capacity, or lithium required for charging and discharging can be contained in the negative electrode even when an active material that does not contain lithium is used in the positive electrode. Thus, the performance of the secondary battery can be enhanced.

As a predoping method according to an embodiment of the present invention, a method of doping the negative electrode with lithium in an amount corresponding to the irreversible capacity may be used in which a redox reaction using a lithium metal plate as a counter electrode is carried out in a liquid electrolyte used in a secondary battery.

As described above, the negative electrode (10) and the lithium metal plate (30) are placed in the liquid electrolyte (20), and a redox reaction is carried out, whereby the safety of the secondary battery can be secured as compared with the method of directly attaching or depositing the lithium metal plate to the negative electrode. In the method of directly attaching or depositing a lithium metal plate to a negative electrode, needle-shaped crystals (dendrites) formed by directly attaching or depositing the lithium metal plate to the negative electrode may have an adverse impact on the separator, thereby impairing the safety.

In addition, the predoping method according to another embodiment of the present invention may be a method in which excess lithium (the amount of irreversible capacity remains in the negative electrode) is removed by dedoping lithium again after the doping. The predoping may comprise a method in which once the negative electrode has been predoped with lithium through a reduction reaction, the amount of lithium other than that of initial irreversible capacity is removed by releasing (dedoping) lithium through an oxidation reaction. For example, a redox reaction may be carried out in a non-aqueous liquid electrolyte and the negative electrode is predoped with lithium in an amount corresponding to the initial irreversible capacity, and the amount of lithium other than that of initial irreversible capacity may be released (dedoped). If the negative electrode is predoped with an amount of lithium corresponding to the irreversible capacity by the above predoping method, particularly, by dedoping, it is possible to achieve an initial efficiency close to 100%. As a result, the capacity ratio of negative electrode/positive electrode (N/P ratio) may approach 1.0, which may enhance the capacity of the secondary battery itself. In addition, although a large exothermic reaction may be accompanied during predoping with lithium, the current during doping with lithium may be controlled, thereby controlling its rate, which may be a great advantage in terms of safety.

Thus, according to the present invention, as the negative electrode is doped through a redox reaction, or doped and then dedoped, with lithium according to the predoping method, it is possible to predope the negative electrode with lithium in an amount corresponding to the irreversible capacity of lithium. As a result, it is possible to reduce the volume expansion of the negative electrode involved in the occlusion and release of lithium. In addition, since the doping speed can be controlled by controlling the current, the safety of doping can also be secured by preventing the generation of a large amount of heat. In particular, when doping in a large amount is carried out, the method may be advantageous for mass production since the temperature can be controlled.

In addition, in step (2-2), a redox reaction may be carried out one or more times to remove lithium doped in an excessive amount on the negative electrode after the predoping.

Lithium salts that may be employed as an electrolyte and organic solvents in the present invention are as described above.

In the secondary battery comprising a silicon-based negative electrode active material predoped with lithium according to an embodiment of the present invention, its energy density can be significantly enhanced, and its cycle characteristics and rate characteristics can be further enhanced.

Step (2-3) is a step of sequentially stacking the negative electrode predoped with lithium, a separator, and a positive electrode comprising a metal oxide active material to prepare an electrode.

When the secondary battery is manufactured, the positive electrode and the separator, and the secondary battery manufacturing process are as described above.

The shape and size of the secondary battery of the present invention are not particularly limited, but it may encompass a cylindrical type, a square type, a pouch type, a film type, or a coin type, depending on each use.

The secondary battery according to the embodiment comprises a negative electrode comprising a silicon-based negative electrode active material predoped with lithium, whereby it is possible not only to achieve safety of the secondary battery, but also to significantly enhance the energy density and enhance the cycle characteristics and rate characteristics.

## Embodiments for Carrying out the Invention

The present invention will be described in more detail with reference to the following examples. However, these examples are provided to illustrate the present invention, and the scope of the examples is not limited thereto only.

## Example 1-1

A silicon-based negative electrode active material (manufactured by DAEJOO) provided with a carbon layer comprising a carbon film and having the following physical properties, Super-P (TIMCAL) as a conductive material, and polyacrylic acid (PAA, Sigma-Aldrich) as a binder were mixed at a weight ratio of 80:10:10 to prepare a negative electrode active material composition.

$SiO_x$, x = 1.0
Carbon content: 5.1% by weight
Average particle diameter ($D_{50}$) of the negative electrode active material: 5.3 $\mu$m

The negative electrode active material composition was applied to a copper foil having a thickness of 18 $\mu$m and dried to prepare a negative electrode having a thickness of 40 $\mu$m and a density of 1.35 g/cm$^3$. The negative electrode was punched out in a circular shape with a diameter of 14 mm and dried under vacuum at 80°C for 12 hours to obtain a negative electrode (step 1-1).

Meanwhile, a porous polypropylene sheet (25 $\mu$m) as a separator was interposed between the negative electrode and a lithium metal plate having a thickness of 20 $\mu$m in a glove box to prepare a cell (step 1-2).

The cell obtained in step 1-2 was placed in a reactor, a lithium non-aqueous liquid electrolyte containing 1 M LiPF$_6$ in a mixed solvent of ethylene carbonate (EC) and diethyl carbonate (DEC) at a volume ratio of 1:1 was used, charging was carried out until the current became 0.005 C at a constant voltage after the voltage had reached 0.005 V at a constant current of 0.1 C, and discharging was carried out at a constant current of 0.1 C until the voltage became 1.5 V to predope the negative electrode with lithium through electrochemical activation (step 1-3).

The cell was separated, and a secondary battery was prepared using the negative electrode predoped with lithium (step 1-4). Specifically, the negative electrode, the separator, and the positive electrode were stacked in this sequence in a globe box, and a lithium secondary battery was manufactured using the same non-aqueous liquid electrolyte. A positive electrode active material employed in the positive electrode was LiCoO$_2$, an aluminum foil of 20 $\mu$m was used as a current collector, and a porous polypropylene sheet (25 $\mu$m) was used as a separator.

## Example 1-2

A negative electrode (a thickness of 40 $\mu$m and a density of 1.5 g/cm$^3$) and a secondary battery were prepared in the same method as in Example 1-1, except that the same silicon-based negative electrode active material as in Example 1-1 and a carbon-based negative electrode material of natural graphite (average particle size: 11 $\mu$m) were mixed at a weight ratio of 50:50.

**Example 1-3**

A negative electrode and a secondary battery were prepared in the same method as in Example 1-1, except that a silicon-based negative electrode active material without a carbon layer ($SiO_x$, x = 1.0, a particle diameter ($D_{50}$) of the negative electrode active material: 5.6 $\mu$m) was used.

**Example 2-1**

<Preparation of a negative electrode>

A silicon-based negative electrode active material (manufactured by DAEJOO) provided with a carbon layer and having the following physical properties, Super-P (TIMCAL) as a conductive material, and polyacrylic acid (PAA, Sigma-Aldrich) as a binder were mixed at a weight ratio of 80:10:10 to prepare a negative electrode active material composition.

$SiO_x$, x = 1.0
Carbon content: 5.1% by weight
Average particle diameter ($D_{50}$) of the negative electrode active material: 5.3 $\mu$m

The negative electrode active material composition was applied to a copper foil having a thickness of 18 $\mu$m, dried, and rolled to prepare a negative electrode having a thickness of 40 $\mu$m and a density of 1.35 g/cm$^3$.

The negative electrode was predoped with lithium through a reduction reaction with a lithium metal plate of 20 $\mu$m at 0.0005 V in a lithium non-aqueous liquid electrolyte containing 1 M $LiPF_6$ in a mixed solvent of ethylene carbonate (EC) and diethylene carbonate (DEC) at a volume ratio of 1:1, dedoped through an oxidation reaction until 1.5 V, and dried to obtain a negative electrode predoped with lithium through electrochemical activation.

<Preparation of a positive electrode>

$LiNi_{0.8}Co_{0.2}O_2$ as a positive electrode active material, Super-P as a conductive material, and polyvinylidene fluoride (PVdF, Solvay) as a binder were used to prepare a positive electrode active material composition (slurry). The positive electrode active material composition was coated on an aluminum foil of 15 $\mu$m, dried, and rolled to obtain a positive electrode.

<Manufacture of a secondary battery>

A separator of a porous polypropylene sheet (25 $\mu$m) was interposed between the negative electrode predoped with lithium and the positive electrode, which was then wound to prepare a jelly roll. Thereafter, it was placed and sealed in a cylindrical can, and a liquid electrolyte containing 1 M $LiPF_6$ in a mixed solvent of ethylene carbonate (EC) and diethylene carbonate (DEC) at a volume ratio of 1:1 was then injected thereto to prepare a 1 Ah-class secondary battery.

**Example 2-2**

A negative electrode and a secondary battery were prepared in the same method as in Example 2-1, except that a polyimide resin was used as a binder.

**Example 2-3**

A negative electrode (a thickness of 37 $\mu$m and a density of 1.10 g/cm$^3$) and a secondary battery were prepared in the same method as in Example 2-2, except that the same silicon-based negative electrode active material as in Example 2-2 and a carbon-based negative electrode material of natural graphite (an average particle size: 7.5 $\mu$m) were mixed at a weight ratio of 50:50.

**Example 3-1**

A silicon-based negative electrode active material (manufactured by DAEJOO) provided with a carbon layer and having the following physical properties, Super-P (TIMCAL) as a conductive material, and polyacrylic acid (PAA, Sigma-Aldrich) as a binder were mixed at a weight ratio of 80:10:10 to prepare a silicon-based negative electrode active material composition.

$SiO_x$, x = 1.0
Carbon content: 5% by weight

Average particle diameter ($D_{50}$) of the silicon-based negative electrode active material: 7.0 $\mu$m

The silicon-based negative electrode active material composition was applied to a copper foil having a thickness of 18 $\mu$m and dried to prepare a negative electrode having a thickness of 41 $\mu$m and a density of 1.3 g/cm$^3$. The negative electrode was punched out to a diameter of 14 mm $\varphi$ and dried under vacuum at 80°C for 12 hours to obtain a negative electrode. When the negative electrode thus prepared was wound and unwound around an axis of 4 mm $\varphi$, the negative electrode active material was not detached from the current collector. Thus, it was confirmed that it had sufficient strength for electrochemical evaluation.

Thereafter, a porous polypropylene sheet (30 $\mu$m) as a separator was interposed between the negative electrode and a lithium metal plate having a thickness of 20 $\mu$m in a glove box to prepare a cell. The cell was placed in a reactor, and a current of 1.5 mA at a constant current until 1 mV with respect to a lithium metal plate potential and a constant voltage of 1 mV with respect to the lithium potential after 1 mV was reached were applied for a predetermined time in a lithium non-aqueous liquid electrolyte containing 1 M LiPF$_6$ in a mixed solvent of ethylene carbonate (EC) and diethylene carbonate (DEC) at a volume ratio of 1:1. Thereafter, the negative electrode was predoped with lithium by carrying out dedoping (release of lithium) at a current of 0.6 mA at a constant current until 2.0 V with respect to the lithium metal plate potential to increase the initial efficiency of the negative electrode. The initial efficiency thus measured was 76.1%.

The cell was separated, and a secondary battery was prepared using the negative electrode predoped with lithium.

Specifically, LiCoO$_2$ as a positive electrode active material, Super-P (TIMCAL) as a conductive material, and polyacrylic acid (PAA, Sigma-Aldrich) as a binder were mixed at a weight ratio of 80:10:10 to prepare a positive electrode active material composition. The positive electrode active material composition was applied to an aluminum current collector and punched out to 16 mm $\varphi$ to prepare a positive electrode. A separator to which a lithium metal plate having a thickness of 15 $\mu$m had been attached was laminated on the positive electrode in which the lithium metal plate was disposed to face the positive electrode. The separator used was a porous polypropylene sheet (25 $\mu$m). The negative electrode predoped with lithium was stacked on the separator to prepare a cell, and a secondary battery was then manufactured using a non-aqueous liquid electrolyte. When the secondary battery was manufactured, the same non-aqueous liquid electrolyte as the non-aqueous liquid electrolyte used in the process of increasing the initial efficiency of the negative electrode was used.

**Example 3-2**

A silicon-based negative electrode active material (manufactured by DAEJOO) provided with a carbon layer and having the following physical properties and a polyimide resin as a binder (manufactured by Ube Industries, Ltd., U-varnish A, an NMP (N-methyl-2-pyrrolidone) solution, a solid content of 18.1% by weight) were used. The silicon-based negative electrode active material and the binder were mixed at a weight ratio of 90:10 (based on the solids content), and its viscosity was adjusted with NMP to prepare a negative electrode active material composition, which was used in the same manner as in Example 3-1 to prepare a negative electrode having a thickness of 37 $\mu$m and a density of 1.03 g/cm$^3$. A silicon-based negative electrode predoped with lithium and a secondary battery were prepared in the same method as in Example 3-1, except that the negative electrode was punched out to 16 mm $\varphi$ and dried under vacuum at 200°C for 10 hours and that a lithium non-aqueous liquid electrolyte containing 1 M LiPF$_6$ in a mixed solvent of ethylene carbonate (EC) and methylethylene carbonate at a volume ratio of 3:7 was used as an electrolyte:

$SiO_x$, x = 1.0
Carbon content: 5.1% by weight

Average particle diameter ($D_{50}$) of the silicon-based negative electrode active material: 5.3 $\mu$m

**Example 3-3**

A negative electrode (a thickness of 37 $\mu$m and a density of 1.00 g/cm$^3$) was prepared in the same method as in Example 3-1, except that a silicon-based negative electrode active material having the following physical properties (manufactured by Shin-Etsu Chemical, KSC801) and a binder at a weight ratio of 85:15 (based on solids content) were

used:

SiO$_x$, x = 1.0
Carbon composite amount in SiOx: 5% by weight relative to SiO$_x$
Particle diameter (D$_{50}$) of the SiO$_x$ carbon composite: 7.0 $\mu$m

The negative electrode was punched out to a diameter of 17 mm $\varphi$ and dried under vacuum at 80°C for 10 hours. A cell comprising the negative electrode, a separator, and a lithium metal plate of 20 $\mu$m was prepared. A lithium non-aqueous liquid electrolyte containing 1 M LiPF$_6$ in a mixed solvent of ethylene carbonate and methylethyl carbonate at a volume ratio of 3:7 as an electrolyte was injected, and it was left therein for 60 hours to predoped the negative electrode with lithium.

Meanwhile, LiNi$_{0.8}$Co$_{0.2}$O$_2$ as a positive electrode active material, acetylene black as a conductive material, and polyvinylidene fluoride (PVdF, Solvay) as a binder at a weight ratio of 92:4:4 were mixed in an NMP (N-methylpyrrolidone) solvent to prepare a positive electrode active material composition (slurry). The positive electrode active material composition was coated on an aluminum foil of 20 $\mu$m, dried, and rolled to obtain a positive electrode. The initial charge and discharge characteristics of the positive electrode had a capacity of 175 mAh/g at 4.3 V to 2.7 V.

A secondary battery was obtained in the same manner as in Example 3-1 using the silicon-based negative electrode (dried at 200°C for 10 hours under vacuum) having a thickness of 40 $\mu$m prepared in the same manner as above.

<Evaluation of the characteristics of the secondary battery using a silicon-based negative electrode>

In the negative electrode predoped with lithium of Example 3-3, the thickness of the negative electrode predoped with lithium was 60 $\mu$m. Thus, the fact that the thickness corresponding to the lithium metal plate (20 $\mu$m) had been increased indicated that no gap was generated by the loss of the lithium metal plate.

The secondary battery of Example 3-3 was charged at a current of 3 mA until 4.3 V, and then a constant voltage of 4.3 V was applied to charge the battery for 8 hours. Subsequently, it was discharged at a constant current of 3 mA until 2.0 V (the negative electrode voltage corresponded to about 0.7 V with respect to the lithium potential). The secondary battery had a charge capacity of 18.0 mAh, a discharge capacity of 14.9 mAh, and an average discharge voltage of 3.60 V. In addition, the discharge capacity up to 3.0 V was 14.0 mAh.

**Comparative Example 1-1**

A negative electrode and a secondary battery were prepared in the same manner as in Example 1-1, except that the negative electrode was not predoped with lithium.

**Comparative Example 1-2**

A negative electrode and a secondary battery were prepared in the same manner as in Example 1-2, except that the negative electrode was not predoped with lithium.

**Comparative Example 1-3**

A negative electrode and a secondary battery were prepared in the same method as in Comparative Example 1-1, except that a silicon-based negative electrode active material without a carbon layer (SiO$_x$, x = 1.0, a particle diameter (D$_{50}$) of the negative electrode active material: 5.8 $\mu$m) was used.

**Comparative Example 2-1**

A negative electrode and a secondary battery were prepared in the same manner as in Example 2-1, except that the negative electrode was not predoped with lithium.

**Comparative Example 2-2**

A negative electrode and a secondary battery were prepared in the same manner as in Example 2-2, except that the negative electrode was not predoped with lithium.

**Comparative Example 2-3**

A negative electrode and a secondary battery were prepared in the same manner as in Example 2-3, except that the negative electrode was not predoped with lithium.

**Comparative Example 3-1**

A negative electrode and a secondary battery were prepared in the same manner as in Example 3-1, except that the negative electrode was not predoped with lithium and that the positive electrode and the lithium metal plate were not in contact.

**Comparative Example 3-2**

A negative electrode and a secondary battery were prepared in the same manner as in Example 3-3, except that a silicon-based negative electrode having a thickness of 40 $\mu$m was not predoped with lithium and that the positive electrode and the lithium metal plate were not in contact.
The secondary battery manufactured using the negative electrode was charged at a current of 1 mA until 4.3 V, and then a constant voltage of 4.3 V was applied to charge the battery for 20 hours. Subsequently, it was discharged at a constant current of 2 mA until 3.0 V (the negative electrode voltage corresponded to about 0.7 V with respect to the lithium potential). The secondary battery had a charge capacity of 18.2 mAh, a discharge capacity of 10.6 mAh, and an average discharge voltage of 3.57 V.

**Comparative Example 3-3**

A negative electrode and a secondary battery were prepared in the same method as in Example 3-1, except that the same silicon-based negative electrode active material as in Example 3-1 and a carbon-based negative electrode material of natural graphite (average particle size: 11 $\mu$m) were mixed at a weight ratio of 50:50, that the negative electrode was not predoped with lithium, and that a silicon-based negative electrode having a thickness of 30 $\mu$m was used. The secondary battery had a charge capacity of 17.8 mAh, a discharge capacity of 11.0 mAh, and an average discharge voltage of 3.59 V.

**Evaluation of the capacity characteristics and initial efficiency of the secondary batteries**

The lithium secondary batteries obtained in the Examples and Comparative Examples were each aged for 12 hours. Thereafter, they were each charged to reach 4.2 V at a constant current of 0.1 C and discharged at a constant current of 0.1 C until the voltage reached 2.5 V using a charging and discharging test device (WonATech). This charge/discharge test was repeated 50 times to obtain a capacity retention rate.
The initial discharge capacity and the capacity retention rate after the cycle were calculated as follows. The results are shown in Table 1. Initial discharge capacity: discharge capacity at the 1st cycle

Capacity retention rate: (discharge capacity at the 50th cycle) / (discharge capacity at the 1st cycle) $\times$ 100

[Table 1]

|  | Negative electrode active material | | Initial discharge capacity (mAh) | Capacity retention rate (%) |
|---|---|---|---|---|
|  | Predoped | Carbon layer | | |
| Ex. 1-1 | ○ | ○ | 12.8 | 99 |
| Ex. 1-2 | ○ | ○ | 8.8 | 99 |
| Ex. 1-3 | ○ | × | 12.9 | 97 |
| C. Ex. 1-1 | × | ○ | 8.5 | 99 |
| C. Ex. 1-2 | × | ○ | 6.5 | 98 |

(continued)

|  | Negative electrode active material | | Initial discharge capacity (mAh) | Capacity retention rate (%) |
|---|---|---|---|---|
|  | Predoped | Carbon layer | | |
| C. Ex. 1-3 | × | × | 8.6 | 95 |

As can be seen from Table 1, the secondary batteries of Examples 1-1 to 1-3 in which the negative electrode had been predoped with lithium had an initial discharge capacity of 8.8 mAh to 12.9 mAh, whereas the secondary batteries of Comparative Examples 1-1 to 1-3 in which the negative electrode had not been predoped with lithium had an initial discharge capacity of 8.6 mAh or less, which was significantly reduced as compared with the secondary batteries of Examples 1-1 to 1-3.

In addition, the secondary batteries of Examples 1-1 to 1-3 had a capacity retention rate of 97% or more, and the secondary batteries of Examples 1-1 and 1-2 had a capacity retention rate of 99%, whereas the secondary battery of Comparative Example 1-3 had a value of 95%, which was significantly reduced as compared with the capacity retention rates of the secondary batteries of Examples 1-1 to 1-3, in particular, Examples 1-1 and 1-2.

[Table 2]

|  | Efficiency (%) | Nominal voltage (V) | Energy (Wh) | Capacity (mAh) |
|---|---|---|---|---|
| Ex. 2-1 | 86.4 | 3.7 | 3.90 | 1.054 |
| Ex. 2-2 | 86.0 | 3.7 | 3.85 | 1.040 |
| Ex. 2-3 | 87.5 | 3.75 | 2.95 | 0.786 |
| C. Ex. 2-1 | 68.7 | 3.9 | 3.10 | 0.794 |
| C. Ex. 2-2 | 67.5 | 3.9 | 3.05 | 0.782 |
| C. Ex. 2-3 | 68.0 | 3.95 | 2.70 | 0.683 |

As can be seen from Table 2, the secondary batteries of Examples 2-1 to 2-3 in which the negative electrode had been predoped with lithium were excellent in the characteristics of the secondary battery as compared with the secondary batteries of Comparative Examples 2-1 to 2-3 in which the negative electrode had not been predoped with lithium.

In particular, the secondary batteries of Examples 2-1 to 2-3 had an efficiency of 86% or more, whereas those of Comparative Examples 2-1 to 2-3 had an efficiency of less than 69%. The secondary battery of Example 2-1 had an efficiency of 86.4%, which was increased by 20% or more as compared with the secondary battery of Comparative Example 2-1 having an efficiency of 68.7%. In addition, the secondary batteries of Examples 2-1 and 2-2 had a capacity of about 1.0 mAh or more, whereas those of Comparative Examples 2-1 to 2-3 had a capacity of less than 0.8 mAh.

Meanwhile, the secondary batteries of the Examples and Comparative Examples were left at room temperature overnight. Thereafter, they were each charged at a constant current of 0.5 mA/cm$^2$ until the voltage of the test cell reached 4.2 V using a charge and discharge test device (manufactured by Nagano Co., Ltd.). Discharging was carried out at a constant current of 0.5 mA/cm$^2$, and the discharging was terminated when the cell voltage reached 2.5 V. The discharge capacity was then measured. This charge and discharge test was repeated 50 times to measure a capacity retention rate.

The discharge capacity and the capacity retention rate after the cycle were calculated above. The results are shown in Table 3.

[Table 3]

|  | Initial discharge capacity (mAh) | Capacity retention rate (%) |
|---|---|---|
| Ex. 2-1 | 13.2 | 99 |
| Ex. 2-2 | 12.8 | 99 |
| Ex. 2-3 | 11.0 | 99 |
| C. Ex. 2-1 | 8.0 | 99 |
| C. Ex. 2-2 | 8.5 | 99 |

(continued)

|  | Initial discharge capacity (mAh) | Capacity retention rate (%) |
|---|---|---|
| C. Ex. 2-3 | 6.0 | 98 |

As can be seen from Table 3, the secondary batteries of Examples 2-1 to 2-3 in which the negative electrode had been predoped with lithium had an initial discharge capacity of 11 mAh to 13.2 mAh, whereas the secondary batteries of Comparative Examples 2-1 to 2-3 in which the negative electrode had not been predoped with lithium had an initial discharge capacity of 8.5 mAh or less, which was reduced by 20% to 50% as compared with the secondary batteries of Examples 2-1 to 2-2.

Meanwhile, the lithium secondary batteries obtained in Examples 3-1 to 3-3 and Comparative Examples 3-1 to 3-3 were measured for the initial efficiency and capacity retention rate in the same manner as above. The results are shown in Fig. 2 and Table 4.

[Table 4]

|  | Initial efficiency (%) | Capacity retention rate (%) |
|---|---|---|
| Ex. 3-1 | 88 | 98 |
| Ex. 3-2 | 89 | 99 |
| Ex. 3-3 | 89 | 98 |
| C. Ex. 3-1 | 62 | 95 |
| C. Ex. 3-2 | 58 | 97 |
| C. Ex. 3-3 | 62 | 96 |

As can be seen from Table 4, the secondary batteries of Examples 3-1 to 3-3 in which the negative electrode had been predoped with lithium had an initial efficiency of 88% to 89% and a capacity retention rate of 98% to 99% after 50 cycles.

In contrast, the secondary batteries of Comparative Examples 3-1 to 3-3 in which the negative electrode had not been predoped with lithium and the lithium metal plate had not been in contact with the positive electrode had an initial efficiency of 58% to 62%, which was reduced by about 20% or more as compared with the secondary batteries of the Examples. In addition, the secondary batteries of Comparative Examples 3-1 to 3-3 were also decreased in the capacity retention rate as compared with the secondary batteries of the Examples.

Meanwhile, Fig. 2 shows the capacity characteristics of the secondary batteries of Example 3-2 and Comparative Example 3-1 with respect to the number of cycles. As can be seen from Fig. 2, the secondary battery of Example 3-2 was enhanced by about 20% or more even after the charge and discharge test had been repeated 50 times as compared with the secondary battery of Comparative Example 3-1.

[Reference Numerals of the Drawings]

10:    negative electrode
20:    liquid electrolyte
30:    lithium metal plate

**Industrial Applicability**

The secondary battery according to the embodiment can not only achieve safety, but also significantly enhance the energy density and enhance the cycle characteristics and rate characteristics. In particular, the secondary battery may be further enhanced in initial discharge capacity and capacity retention rate; thus, it can be advantageously used in the secondary battery field.

**Claims**

1. A secondary battery, which comprises a positive electrode, a negative electrode, and an electrolyte, wherein the positive electrode comprises a metal oxide active material, the negative electrode comprises a silicon-based negative electrode active material, and the negative electrode is predoped with lithium in an amount corresponding to the initial irreversible capacity of the negative electrode.

2. The secondary battery of claim 1, wherein the metal oxide active material comprises an oxide having a spinel structure comprising lithium cobaltate, lithium manganate, or a mixture thereof.

3. The secondary battery of claim 1, wherein the silicon-based negative electrode active material comprises at least one selected from the group consisting of a silicon fine particle, a compound represented by $SiO_x$ ($0.3 \leq x \leq 1.6$), silicon dioxide, and a silicate comprising magnesium, calcium, aluminum, or a combination thereof.

4. The secondary battery of claim 3, wherein the silicate comprising magnesium comprises an $MgSiO_3$ crystal, an $Mg_2SiO_4$ crystal, or a mixture thereof.

5. The secondary battery of claim 1, wherein the silicon-based negative electrode active material comprises a carbon layer comprising a carbon film on its surface.

6. The secondary battery of claim 5, wherein the carbon layer comprises carbon in an amount of 2% by weight to 10% by weight based on the total weight of the negative electrode active material.

7. The secondary battery of claim 5, wherein the carbon layer comprises at least one selected from the group consisting of a carbon nanofiber, graphene, graphene oxide, and reduced graphene oxide.

8. The secondary battery of claim 5, wherein the cumulative 50% average particle diameter ($D_{50}$) in the particle distribution of the negative electrode active material is 0.5 $\mu$m to 15 $\mu$m.

9. The secondary battery of claim 1, which satisfies the following Relationship 1, wherein the lithium metal plate for lithium doping has a thickness of 10 $\mu$m to 30 $\mu$m and a density of 0.3 g/cm$^3$ to 0.8 g/cm$^3$.

[Relationship 1]

$$0.5 \; < \; \{TA \times DA \times CA0(100 - ICE)/100\}/CLt \times (CLa/CLt)\} \times TL \times DL \; < \; TL$$

$$< \; \{TA \times DA \times CA0(100 - ICE)/100\}/CLt \times (CLa/CLt) \times DL$$

in Relationship 1,

TA: thickness of the negative electrode ($\mu$m)
DA: density of the negative electrode (g/cm$^3$)
ICE: initial efficiency (%)
CA0: first charge capacity of the negative electrode (mAh/g)
CLt: theoretical capacity of lithium (3,600 mAh/g)
CLa: actual capacity of lithium (mAh/g)
TL: thickness of the lithium metal plate ($\mu$m)
DL: density of the lithium metal plate (0.53 g/cm$^3$).

10. A process for manufacturing the secondary battery of claim 1, which comprises:

(1-1) applying a negative electrode active material composition comprising a silicon-based negative electrode active material to a negative electrode current collector to prepare a negative electrode;
(1-2) interposing a separator between the negative electrode and a lithium metal plate to prepare a cell;
(1-3) electrochemically activating the cell obtained in step (1-2) to predope the negative electrode with lithium; and
(1-4) manufacturing a secondary battery using the negative electrode predoped with lithium.

**11.** The process for manufacturing the secondary battery according to claim 10, which comprises, in step (1-3), predoping the negative electrode with lithium in an amount corresponding to the initial irreversible capacity of the negative electrode by causing lithium adsorption and desorption while electrochemically contacting the negative electrode and the lithium metal plate.

**12.** The process for manufacturing the secondary battery according to claim 10, wherein, in step (1-3), once the negative electrode has been electrochemically predoped with lithium, the amount of lithium other than the amount of lithium corresponding to the initial irreversible capacity of the negative electrode is released to carry out predoping.

**13.** A process for manufacturing the secondary battery of claim 1, which comprises:

(2-1) applying a negative electrode active material composition comprising a silicon-based negative electrode active material to a negative electrode current collector to prepare a negative electrode;
(2-2) placing the negative electrode and a lithium metal plate in a reactor and then carrying out a redox reaction to predope the negative electrode with lithium; and
(2-3) sequentially stacking the negative electrode predoped with lithium, a separator, and a positive electrode comprising a metal oxide active material to prepare an electrode.

**14.** The process for manufacturing the secondary battery according to claim 13, wherein, in step (2-2), a redox reaction is carried out one or more times to remove lithium doped in an excessive amount on the negative electrode after the predoping.

**15.** The process for manufacturing the secondary battery according to claim 10 or 13, which further comprises, after the negative electrode active material composition has been applied to the negative electrode current collector, rolling and drying it.

**16.** The process for manufacturing the secondary battery according to claim 15, wherein the negative electrode active material composition comprises a binder, and the binder comprises at least one selected from the group consisting of a fluorine-based resin, a rubber-based material, a polyolefin, an acrylic resin, and a polyimide-based resin.

**17.** The process for manufacturing the secondary battery according to claim 10 or 13, wherein the predoping is carried out in a liquid electrolyte, and the liquid electrolyte comprises a non-aqueous electrolyte, a polymer electrolyte, or a polymer gel electrolyte.

**18.** The process for manufacturing the secondary battery according to claim 10 or 13, wherein the silicon-based negative electrode active material comprises at least one selected from the group consisting of a silicon fine particle, a compound represented by $SiO_x$ ($0.3 \leq x \leq 1.6$), silicon dioxide, and a silicate comprising magnesium, calcium, aluminum, or a combination thereof.

**19.** The process for manufacturing the secondary battery according to claim 18, wherein the silicon-based negative electrode active material is obtained by mixing a silicon powder and a silicon dioxide powder to obtain a silicon-silicon oxide raw material powder mixture; heating and depositing the raw material powder mixture to obtain a silicon oxide composite; and pulverizing and classifying the silicon oxide composite to obtain a silicon-based negative electrode active material.

**20.** The process for manufacturing the secondary battery according to claim 19, which further comprises forming a carbon layer comprising a carbon film on the surface of the negative electrode active material by using a chemical thermal decomposition deposition method after the pulverization and classification.

**21.** The process for manufacturing the secondary battery according to claim 20, which further comprises pulverizing and classifying the negative electrode active material after the carbon layer is formed.

**22.** The process for manufacturing the secondary battery according to claim 10 or 13, wherein the lithium metal plate has a thickness of 10 $\mu$m to 30 $\mu$m and a density of 0.3 g/cm$^3$ to 0.8 g/cm$^3$.

[Fig. 1]

[Fig. 2]

## INTERNATIONAL SEARCH REPORT

International application No.

**PCT/KR2020/011028**

**A. CLASSIFICATION OF SUBJECT MATTER**

**H01M 4/131**(2010.01)i; **H01M 4/134**(2010.01)i; **H01M 4/1391**(2010.01)i; **H01M 4/1395**(2010.01)i; **H01M 4/04**(2006.01)i; **H01M 4/48**(2010.01)i; **H01M 4/38**(2006.01)i; **H01M 4/36**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/131; H01G 13/00; H01G 9/038; H01M 10/058; H01M 4/139; H01M 4/48; H01M 4/58; H01M 4/134; H01M 4/1391; H01M 4/1395; H01M 4/04; H01M 4/38; H01M 4/36; H01M 10/052

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프리도핑(predoping), 리튬(lithium), 규소계 음극 활물질(silicon-based negative active material), 탄소층(carbon layer), MgSiO3, Mg2SiO4, 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | JP 2016-062743 A (SEKISUI CHEM CO., LTD.) 25 April 2016. See paragraphs [0007]-[0022], [0048], [0058], [0059] and [0088]. | 1-3,9 |
| Y | | 4-8,10-22 |
| Y | KR 10-2019-0066596 A (DAE JOO ELECTRONIC MATERIALS CO., LTD.) 13 June 2019. See paragraphs [0014]-[0016], [0018]-[0047] and [0054]-[0057]. | 4-8,19-21 |
| Y | WO 2014-142523 A1 (LG CHEM, LTD.) 18 September 2014. See paragraphs [0001], [0026]-[0028] and [0048]-[0050]; claim 1; and figure 2. | 10-22 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 November 2020** | **30 November 2020** |

| Name and mailing address of the ISA/KR | Authorized officer |
|---|---|
| **Korean Intellectual Property Office** **Government Complex Daejeon Building 4, 189, Cheongsa-ro, Seo-gu, Daejeon, Republic of Korea** **35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/011028**

### C.   DOCUMENTS CONSIDERED TO BE RELEVANT

| Category* | Citation of document, with indication, where appropriate, of the relevant passages | Relevant to claim No. |
|---|---|---|
| Y | KR 10-2019-0065182 A (DAE JOO ELECTRONIC MATERIALS CO., LTD.) 11 June 2019. See paragraphs [0009]-[0011], [0013], [0025]-[0039], [0041]-[0045], [0047]-[0050], [0052]-[0071] and [0078]-[0081]. | 4-8,19-21 |
| Y | KR 10-1179629 B1 (KOREA INSTITUTE OF ENERGY RESEARCH) 10 September 2012. See paragraphs [0011]-[0015]. | 10-22 |

Form PCT/ISA/210 (second sheet) (July 2019)

**INTERNATIONAL SEARCH REPORT**
Information on patent family members

International application No.

**PCT/KR2020/011028**

| Patent document cited in search report | | | Publication date (day/month/year) | Patent family member(s) | | | Publication date (day/month/year) |
|---|---|---|---|---|---|---|---|
| JP | 2016-062743 | A | 25 April 2016 | JP | 6539029 | B2 | 03 July 2019 |
| KR | 10-2019-0066596 | A | 13 June 2019 | CN | 111433949 | A | 17 July 2020 |
| | | | | US | 2020-0295352 | A1 | 17 September 2020 |
| | | | | WO | 2019-112325 | A1 | 13 June 2019 |
| WO | 2014-142523 | A1 | 18 September 2014 | CN | 104584278 | A | 29 April 2015 |
| | | | | CN | 104584278 | B | 29 September 2017 |
| | | | | JP | 2016-506040 | A | 25 February 2016 |
| | | | | JP | 6294348 | B2 | 14 March 2018 |
| | | | | KR | 10-2014-0111622 | A | 19 September 2014 |
| | | | | US | 2015-0017543 | A1 | 15 January 2015 |
| | | | | US | 9705154 | B2 | 11 July 2017 |
| KR | 10-2019-0065182 | A | 11 June 2019 | CN | 111418095 | A | 14 July 2020 |
| | | | | WO | 2019-108050 | A1 | 06 June 2019 |
| KR | 10-1179629 | B1 | 10 September 2012 | | None | | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002313324 A
- JP 2008084842 A
- JP 2011222153 A
- JP 6274253 B